Europäisches Patentamt

(19) European Patent Office    (11) Veröffentlichungsnummer: **0 102 480**

Office européen des brevets    **B1**

(12) **EUROPÄISCHE PATENTSCHRIFT**

(45) Veröffentlichungstag der Patentschrift:
20.07.88

(21) Anmeldenummer: 83106728.5

(22) Anmeldetag: 06.07.83

(51) Int. Cl.⁴: **F 28 C  3/02,** B 01 D  19/00,
F 28 C  3/06, F 28 F  13/06,
B 01 D  1/14 //
F15D1/10

(54) **Vorrichtung zur Wärme- und Stoffübertragung zwischen Flüssigkeiten und Gasen oder Dämpfen.**

(30) Priorität: 13.07.82  HU 227182

(43) Veröffentlichungstag der Anmeldung:
14.03.84 Patentblatt 84/11

(45) Bekanntmachung des Hinweises auf die Patenterteilung:
20.07.88 Patentblatt 88/29

(84) Benannte Vertragsstaaten:
AT BE CH DE FR GB IT LI LU NL SE

(56) Entgegenhaltungen:
DE-A-2 262 838
DE-A-2 502 303
FR-A-2 484 070
GB-A-480 206
GB-A-734 185
GB-A-1 433 465
US-A-3 788 953
US-A-4 009 229

(73) Patentinhaber: ENERGIAGAZDALKODASI INTEZET,
33- 34, Bem- rakpart, H-1027 Budapest II (HU)

(72) Erfinder: Bocskor, Adám, Dipl.- Ing., Benyovszky
M. u. 52, H-1089 Budapest (HU)
Erfinder: Cseh, Otto, Dipl.- Ing., Apály u. 2/b.,
H-1134 Budapest (HU)
Erfinder: Iring, Rezsö, Dipl.- Ing. Dr., Kresz G. u.
36, H-1132 Budapest (HU)
Erfinder: Kiss, László, Dipl.- Ing., Bartok Béla ut
60, H-1113 Budapest (HU)

(74) Vertreter: Füchsle, Klaus, Dipl.- Ing., Hoffmann .
Eitle & Partner Patentanwälte Arabellastrasse 4,
D-8000 München 81 (DE)

**Beschreibung**

Die Erfindung bezieht sich auf eine Vorrichtung zur Wärme- und/oder Stoffübertragung zwischen strömenden Flüssigkeiten und dazu entgegengesetzt oder quer strömenden Gasen oder Dämpfen, so daß die Flüssigkeiten und die Gase oder Dämpfe einander mindestens teilweise berühren und wobei die Flüssigkeit von mindestens einer flüssigkeitsführenden Fläche getragen wird, die von der Flüssigkeit durchströmte Öffnungen aufweist. Eine derartige Vorrichtung ist nach der DE-A-2 262 838 bekannt.

Solche Vorrichtungen finden in der Energieindustrie (z. B. in Kraftwerken als thermische Entgaser), in der chemischen Industrie oder in der Wasserwirtschaft (z. B. als Kolonnen) eine breite Anwendung. Wie bekannt, finden eine Wärme- und/oder Stoffübertragung überall statt, wo Strömungsmittel einander mindestens teilweise berühren.

Die Schwierigkeiten des Betriebes der herkömmlichen Vorrichtungen zur gleichzeitigen Wärmeübertragung und Stoffübertragung ergeben sich aus der Oberflächenspannung der Flüssigkeit und aus dem laminaren Charakter der Flüssigkeitsströmung. Die Oberflächenspannung behindert aufgrund des durch sie verursachten Druckunterschieds die Gasdiffusion aus der Flüssigkeit, während die laminare Strömung nicht nur die Gasdiffusion, sondern auch die Wärmeübertragung durch die langen Diffusions- und Wärmeübertragungswege negativ beeinflußt.

Bei einem bekannten thermischen Entgaser sind Platten übereinander angeordnet, an denen eine Flüssigkeitsschicht ausgebildet ist. Die Platten sind mit Öffnungen versehen, durch welche die Flüssigkeit nach unten abfließt. Das Gas oder der Dampf strömt der Strömungsrichtung der Flüssigkeit entgegengesetzt nach oben oder dazu senkrecht in Querrichtung. Die Oberfläche der hier strömenden Flüssigkeit ergibt den überwiegenden Teil der zur Wärme- und Stoffübertragung dienenden Flüssigkeitsfläche. Diese weit verbreiteten sog. Kaskadenvorrichtungen haben den Vorteil einer relativ großen Flächendichte. Es kann also in einem gegebenen Vorrichtungsvolumen eine relativ große Flüssigkeitsfläche erreicht werden, wodurch die Abmessungen der Vorrichtung relativ klein gehalten werden können. Diese Vorrichtungen sind meistens als ein aufrechtstehender Zylinder ausgebildet; sie benötigen also eine relativ kleine Grundfläche.

Diese Vorrichtungen sind aber ebenfalls mit dem Nachteil behaftet, daß die die Öffnungen der Platten durchströmende Flüssigkeit eine laminare Strömung aufweist. Diese Wirkung wird noch dadurch verstärkt, daß zur Volumenverkleinerung die Öffnungsquerschnitte in den Platten klein gehalten sind und folglich die Reynoldssche Zahl der Flüssigkeitsströmung ebenfalls klein ist. Um diesen Nachteil zu eliminieren, wurden die Vorrichtungsabmessungen erhöht. Trotzdem kann die erwartete Wirkung, z. B. der gewünschte Grad der Entgasung, nicht erreicht werden. In diesem Fall wird dann beispielsweise ein zusätzlicher Nachsieder angewendet.

Es wurde bereits empfohlen, das in die Vorrichtung einzubringende Wasser fein zu zerstäuben, um die Diffusions- bzw. Wärmeleitungswege zu vermindern und die Flüssigkeitsfläche zu vergrößern. Die Oberflächenspannung ist aber in den kleinen Tropfen noch größer und der laminare Charakter der Strömung wurde beibehalten. Zur Zerstäubung des Wassers wird noch dazu zusätzliche Energie verbraucht. Folglich kann eine bemerkenswerte Verbesserung auch durch das Zerstäuben des Wassers nicht erreicht werden und die Anwendung eines Nachsieders kann oft nicht vermieden werden.

So ist aus der obengenannten DE-A-2 262 838 ein Kontaktkörper für Flüssigkeit und Gas bekannt, welcher aus gegeneinanderliegenden Wellplatten besteht, zwischen denen Gaskanäle verbleiben, während die Flüssigkeit durch in den Wellplatten vorgesehene Öffnungen im wesentlichen laminar hindurchfließt.

Schließlich zeigt die GB-A-1 433 465 eine Austauscher-Vorrichtung, bei welcher die Flüssigkeit auf der Unterseite einer flüssigkeitsführenden Fläche und über unterhalb dieser Fläche angeordnete Stangen, die manschettenförmige Umlenkelemente mit trichterförmigen Auffangöffnungen aufweisen, geführt wird. Für einen Wärme- oder Gasaustausch vorteilhafte Turbulenzen werden dadurch jedoch in dem im wesentlichen laminaren Flüssigkeitsstrom nicht erzeugt.

Der Erfindung liegt gegenüber diesem Stand der Technik die Aufgabe zugrunde, eine Vorrichtung zur Wärme- und/oder Stoffübertragung zwischen Flüssigketen und Gasen oder Dämpfen schaffen, mit der die Unzulänglichkeiten der bekannten Lösungen und die die Gasdiffusion und die Wärmeübertragung verhindernden Erscheinungen eliminiert werden können sowie ein einfacher, kostengünstiger und sicherer Betrieb ermöglicht wird.

Die Erfindung beruht auf der Erkenntnis, daß die durch die Plattenöffnungen hindurchfließenden Flüssigkeitsstrahlen hochgradig turbulent gemacht werden sollen und eine turbulente Strömung auf der mindestens einen flüssigkeitsführenden Fläche hervorgerufen werden soll. Damit kann eine totale Turbulenz im Inneren der Vorrichtung bei optimaler "Flächendichte" erreicht werden.

Die Erfindung selbst besteht nun darin, daß in Strömungsrichtung vor jeder Öffnung ein aus der flüssigkeitsführenden Fläche ragendes Turbulenzelement angeordnet ist.

Durch die erfindungsgemäße Lösung entsteht eine turbulente Strömung nicht nur in der Flüssigkeitsschicht auf der Fläche, sondern auch in den Flüssigkeitsstrahlen. Da in turbulenter

Strömung die im Inneren des Strahles und an seinem Rande befindlichen Flüssigkeitspartikel schnell und oft ihre Plätze wechseln, verändert sich auch die Charakteristik der Wärmeübergabe. Die langsame Wärmeleitung wird durch die viel effektivere Konvenktions-Wärmeübergabe ersetzt. Hier ist auch die Gasausscheidung viel wirkungsvoller, da anstatt der langsamen Diffusion die Oberflächengasausscheidung auftritt.

Erfindungsgemäß kann die Fläche als eine Platte oder eine Schale oder als ein offener Kanal ausgebildet sein.

Die Vorrichtung kann weiterhin mit einem die Flüssigkeit auf die Fläche aufbringenden Rohr versehen sein, dessen Längsachse zu der Fläche parallel verläuft. Die Längsachse kann auch in einem spitzen Winkel zu der Fläche verlaufen. Vorteilhafterweise ist die Auslaßöffnung des Einlaßrohres mit einem gewissen Abstand über der Fläche angeordnet.

Erfindungsgemäß kann ferner die Fläche geneigt zu der Waagerechten angeordnet sein.

Für die Ausbildung des Turbulenzelementes bieten sich zwei Möglichkeiten. Es kann einerseits als ein mit der Fläche fest verbundener, z. B. damit verschweißter Draht oder andererseits selbst aus dem Material der Fläche, d. h. damit einstückig, ausgebildet sein.

Weitere Einzelheiten der Erfindung werden im Zusammenhang mit Ausführungsbeispielen unter Bezugnahme auf die beigefügte Zeichnung erläutert. In der Zeichnung zeigt:

Fig. 1 einen Schematischen Querschnitt einer Ausführungsform der erfindungsgemäßen Vorrichtung, mit einem einzigen Flächenteil, wobei die Strömung der Flüssigkeitsschicht oberhalb der Fläche mit einem durch ein Rohr einfließenden Flüssigkeitsstrom erzeugt wird,

Fig. 2 denselben Schnitt wie in Fig. 1, jedoch einer anderen Ausführungsvariante, bei welcher die Strömung der Flüssigkeitsschicht durch die geneigte Anordnung der Fläche erzeugt wird.

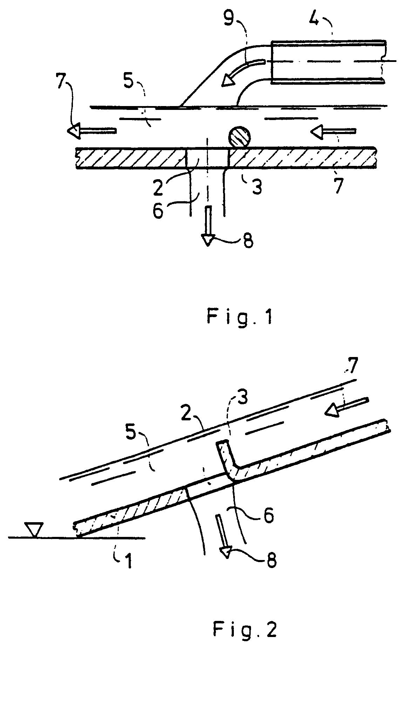

Wie aus der Fig. 1 im Schnitt ersichtlich, ist eine Flüssigkeitsschicht 5 auf einer flüssigkeitsführenden Fläche 1 ausgebildet. In der Fläche sind Öffnungen 2 ausgearbeitet, die von der Flüssigkeit in Form jeweils eines Flüssigkeitsstrahles 6 durchströmt werden. Mit einem gewissen Abstand ist ein Einlaßrohr 4 über der Fläche 1 angeordnet, dessen Längsachse - in dieser Ausführungsform - zur Fläche 1 parallel ist.

Erfindungsgemäß wird die Flüssigkeitsschicht 5 auf der Fläche 1 in Strömung gebracht, wie es mit Pfeilen 7 in Fig. 1 angedeutet ist. In Strömungsrichtung (Pfeil 7) vor jeder Öffnung 2 ist ein Turbulenzelement 3 auf der Fläche 1 befestigt angeordnet, das aus der Fläche 1 ragt. Das Turbulenzelement 3 ist hier in Form eines Stolperdrahtes ausgeführt, der - senkrecht zu der Figur - entlang den hintereinander angeordneten Öffnungen 2 auf die Platte 1 aufgeschweißt ist.

Die Strömung der Flüssigkeit auf der Fläche 1 in Richtung des Pfeils 7 wird dadurch erzeugt, daß die Flüssigkeit aus dem Einlaßrohr 4 auf die Fläche 1 mit einer gewissen Geschwindigkeit, d. h. mit dem erforderlichen Impuls, austritt, wie es mit Pfeil 9 angedeutet ist. Dieser Impuls hält die Strömung der Flüssigkeitsschicht 5 aufrecht.

In Fig. 2 ist eine andere Ausführungsform der erfindungsgemäßen Vorrichtung dargestellt, wobei die Turbulenzelemente 3 selbst aus dem Material der Fläche 1, damit einstückig, ausgebildet sind. Diese Turbulenzelemente 3 können z. B. in einem Arbeitsgang durch Pressen (Auslochen der Fläche 1 und Aufbiegen des Turbulenzelementes 3) hergestellt werden.

Die Fläche 1 ist hier geneigt zu der Waagerechten angeordnet. Die Strömung der Flüssigkeitsschicht 5 kann in Pfeilrichtung 7 durch die Gravitation erzeugt werden; die Ausbildung und Anordnung des Einlaßrohres 4 sind hier also nicht kritisch.

Die erfindungsgemäße Vorrichtung arbeitet wie folgt. Die Flüssigkeit wird in Form einer Schicht 5 auf der Fläche 1 - die als eine Platte, eine Schale oder als ein Kanal ausgeführt werden kann - aufgebracht und ins Strömen gebracht, und zwar entweder durch den durch das Einlaßrohr 4 erzeugten Strömungsimpuls oder durch Schwerkraft aufgrund der geneigten Anordnung der Fläche 1. Die strömende Flüssigkeitsschicht 5 trifft mindestens teilweise auf die Turbulenzelemente 3, wodurch die Flüssigkeitsschicht 5 in intensive Turbulenz gerät. Besonders turbulent wird aber die Strömung unmittelbar nach dem Turbulenzelement 3, wo sich die Öffnungen 2 in der Fläche 1 befinden. Dadurch wird die Strömung des ausfließenden Flüssigkeitsstrahles 6 in Pfeilrichtung 8 besonders turbulent.

Versuche mit einem Versuchsexemplar der erfindungsgemäßen Vorrichtung haben erwiesen, daß die totale Turbulenz der Flüssigkeitsschicht 5 und des Flüssigkeitsstrahles 6 nicht nur oberhalb der kritischen Reynoldsschen Zahl von 2320, sondern weit unterhalb, beginnend von ungefähr der Reynoldsschen Zahl 1000, entsteht. Trotz der ordnenden Wirkung der Konfusor-Strömung ist die Grundströmung stark turbulent. Es entsteht auf der Fläche 1 eine zusätzliche turbulente Strömungsschicht.

**Patentansprüche**

1. Vorrichtung zur Wärme- und/oder Stoffübertragung zwischen strömenden Flüssigkeiten und dazu entgegengesetzt oder quer strömenden Gasen oder Dämpfen, so daß die Flüssigkeiten und die Gase oder Dämpfe einander mindestens teilweise berühren und wobei die Flüssigkeit von mindestens einer flüssigkeitsführenden Fläche (1) getragen ist, die von der Flüssigkeit durchströmte Öffnungen (2) aufweist, dadurch gekennzeichnet, daß in Strömungsrichtung vor jeder Öffnung (2) ein aus der Fläche (1) ragendes Turbulenzelement (3) angeordnet ist.

2. Vorrichtung nach Anspruch 1, dadurch gekennzeichnet, daß die Fläche (1) als eine Platte oder Schale oder ein offener Kanal ausgebildet ist.

3. Vorrichtung nach Anspruch 1 oder 2, dadurch gekennzeichnet, daß ein die Flüssigkeit auf die Fläche (1) aufbringendes Einlaßrohr (4) vorgesehen ist, dessen Längsachse zu der Fläche (1) parallel verläuft.

4. Vorrichtung nach Anspruch 1 oder 2, dadurch gekennzeichnet, daß die Längsachse des Einlaßrohres (4) in einem spitzen Winkel zu der Fläche (1) verläuft.

5. Vorrichtung nach einem der vorangehenden Ansprüche, dadurch gekennzeichnet, daß die Auslaßöffnung des Einlaßrohres (4) mit einem Abstand über der Fläche (1) angeordnet ist.

6. Vorrichtung nach einem der vorangehenden Ansprüche, dadurch gekennzeichnet, daß die Fläche (1) geneigt angeordnet ist.

7. Vorrichtung nach einem der vorangehenden Ansprüche, dadurch gekennzeichnet, daß das Turbulenzelement (3) als ein mit der Fläche (1) fest verbundener Draht ausgebildet ist.

8. Vorrichtung nach einem der vorangehenden Ansprüche, dadurch gekennzeichnet, daß das Turbulenzelement (3) aus dem Material der Fläche (1), d. h. einstückig, z. B. in Form einer Aufbiegung, ausgebildet ist.

## Claims

1. Apparatus for heat and/or mass exchange between flowing liquids and gases or vapours flowing oppositely or transversely thereto, so that the liquids and the gases or vapours at least partly contact each other and wherein the liquid is carried by at least one liquid-guiding surface (1) having apertures (2) through which the liquid flows, characterised in that a turbulence element (3) projecting from the surface (1) is arranged in front of each aperture (2), taken in the direction of flow.

2. Apparatus according to claim 1, characterised in that the surface (1) is formed as a plate or tray or an open channel.

3. Apparatus according to claim 1 or 2, characterised in that an inlet pipe (4) is provided for applying the liquid to the surface (1), the longitudinal axis of the pipe extending parallel with the surface (1).

4. Apparatus according to claim 1 or 2, characterised in that the longitudinal axis of the pipe extends at an acute angle to the surface (1).

5. Apparatus according to one of the preceding claims, characterised in that the outlet opening of the inlet pipe (4) is arranged at a distance above the surface (1).

6. Apparatus according to one of the preceding claims, characterised in that the surface (1) is arranged at an inclination.

7. Apparatus according to one of the preceding claims, characterised in that the turbulence element (3) is formed as a wire rigidly connected to the surface (1).

8. Apparatus according to one of the preceding claims, characterised in that the turbulence element (3) is formed from the material of the surface (1), i.e. of one piece, e.g. in the form of a bent-up piece.

## Revendications

1. Dispositif de transfert de chaleur et/ou de matière entre des liquides en cours d'écoulement et des gaz ou vapeurs en cours d'écoulement dans le sens inverse ou dans le sens transversal, de telle sorte que les liquides et les gaz ou vapeurs entrent au moins partiellement en contact entre eux, ledit liquide étant supporté par au moins une surface (1) de guidage de liquide, qui présente des ouvertures (2) traversées par le liquide, caractérisé en ce qu'un élément de turbulence (3) dépassant de la surface (1) est disposé en amont de chaque ouverture (2), en référence au sens de l'écoulement.

2. Dispositif selon la revendication 1, caractérisé en ce que la surface (1) est défini par une plaque, une coquille ou un canal ouvert.

3. Dispositif selon la revendication 1 ou 2, caractérisé en ce qu'il comporte un tuyau d'amenée (4) du liquide sur la surface (1), l'axe longitudinal dudit tuyau s'étendant parallèlement à la surface (1).

4. Dispositif selon la revendication 1 ou 2, caractérisé en ce que l'axe longitudinal du tuyau d'amenée (4) s'étend en formant un angle aigu avec la surface (1).

5. Dispositif selon l'une des revendications précédentes, caractérisé en ce que l'orifice de sortie du tuyau d'amenée (4) est disposé une certaine distance au-dessus de la surface (1).

6. Dispositif selon une des revendications précédentes, caractérisé en ce que la surface (1) est inclinée.

7. Dispositif selon une des revendications précédentes, caractérisé en ce que l'élément de turbulence (3) est un fil relié à la surface (1).

8. Dispositif selon une des revendications précédentes, caractérisé en ce que l'élément de turbulence (3) est constitué par la matière de la surface (1) et fait corps avec cette dernière, par exemple sous la forme d'une partie coudée relevée.

Fig.1

Fig.2